Europäisches Patentamt

European Patent Office

Office européen des brevets

(11) Publication number: **0 091 282**
**B1**

# (12) EUROPEAN PATENT SPECIFICATION

(45) Date of publication of patent specification: **07.01.87**

(21) Application number: **83301829.4**

(22) Date of filing: **31.03.83**

(51) Int. Cl.⁴: **G 01 L 5/13,** G 01 L 1/14

(54) **Load sensor, e.g. for sensing a vehicle draft load.**

(30) Priority: **01.04.82 US 364372**

(43) Date of publication of application:
**12.10.83 Bulletin 83/41**

(45) Publication of the grant of the patent:
**07.01.87 Bulletin 87/02**

(84) Designated Contracting States:
**AT DE FR GB IT SE**

(56) References cited:
**DE-A-2 511 413**
**GB-A-1 528 305**
**US-A-4 248 317**
**US-A-4 287 776**

(73) Proprietor: **DEERE & COMPANY**
**1 John Deere Road**
**Moline Illinois 61265 (US)**

(72) Inventor: **Espiritu Santo, Eugenio**
**1720 Cottage Lane**
**Cedar Falls Iowa 50613 (US)**
Inventor: **Baxter, Kenneth Dale**
**628 Oak Park Boulevard**
**Cedar Falls Iowa 50613 (US)**
Inventor: **Bluem, Gary Raymond**
**200 Black Oaks Lane**
**Wayzata Minnesota 55391 (US)**

(74) Representative: **Pears, David Ashley et al**
**REDDIE & GROSE 16 Theobalds Road**
**London WC1X 8PL (GB)**

Courier Press, Leamington Spa, England.

## Description

The present invention relates to a load sensor comprising an open frame deformable by an applied load, and a transducer attached between two limbs of the frame and providing a signal dependent upon the space between the two limbs.

Such a sensor may be used in particular as a draft load sensor for a tractor or other vehicle. The frame is tensioned by the draft load to pull the said limbs slightly together. The transducer measures the distance between the limbs and hence, by virtue of calibration, the draft load.

The invention relates more specifically to a sensor of the kind set forth in the introductory part of claim 1 and as described in US 4 287 776 (although that sensor is not designed as a draft load sensor). In US 4 286 776 the housing and plunger are fixed to two frame limbs respectively. The object of the present invention is to provide a sensor in which the transducer is in the form of a "snap-in" unit which is easy to remove for servicing or replacement.

The invention is characterised in claim 1 and advantageous developments of the invention are set forth in the dependent claims.

The invention will be described in more detail, by way of example, with reference to the accompanying drawings, in which:

Fig. 1 is a view of a sensor embodying the present invention,

Fig. 2 is an enlarged partial sectional view of a portion of Fig. 1, and

Figs. 3 and 4 are partial views similar to Fig. 2 of alternative embodiments of the present invention.

A draft sensor 10 includes a frame 12 composed of a pair of links 14 and 16 connected together at opposite ends, as described in detail in EP 0 057 100. A transducer 20 is inserted in any member where it would be desirable to measure forces, such as in the link or links of a hitch for an agricultural vehicle.

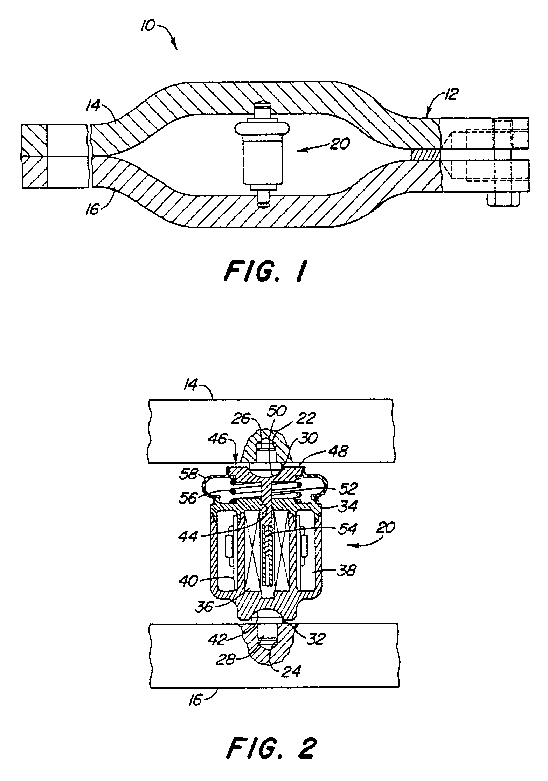

Referring now to Fig. 2, the links 14 and 16 each have blind bores 22 and 24 drilled therein. Support pins 26 and 28 are press-fitted into the bores 22 and 24 and have heads 30 and 32 with rounded bearing surfaces.

The transducer 20 has a plastics or other non-magnetic cylindrical housing 34 forming a transducer chamber in which is mounted the coil assembly 36 of a conventional linear variable differential transformer (LVDT), such as are available from Schaevitz Engineering or Trans-Tek, Inc. in the USA. The housing also forms an annular outer chamber 38 which surrounds the transducer chamber. A circuit board 40 may be positioned in the outer chamber 38 for mounting thereon the components of a conventional LVDT circuit, such as described on page 17—56 of Fink's "Electronics Engineers' Handbook", McGraw-Hill, 1975. In this manner, the circuit board 40 is entirely protected from the environment by being located in the outer chamber 38. One end of the housing 34 is recessed to provide a socket 42 for engaging the head 32 of the support pin 28. The other end of the housing 34 has a bore 44 extending therethrough and communicating with the transducer chamber.

The transducer 20 also has a non-magnetic plunger 46 with a head 48 having a rounded recess 50 engaging the head 30 of the support pin 26. The plunger has a shaft 52 which extends from the head 48 through bore 44 to an end to which is fixed the hollow cylindrical ferrite core member 54 of the LVDT. The shaft 52 supports the core 54 for sliding movement within the coil assembly 36. A spring 56 is mounted over the shaft 52 and urges the plunger 46 and housing 34 away from each other so that they are maintained in contact with their respective support pins 26 and 28. A flexible bellows 58 is sealingly fixed at opposite ends to the plunger 46 and the housing 34 to prevent contamination of the components of the transducer 20 from the environment. A silicone rubber material is suitable for the bellows 58.

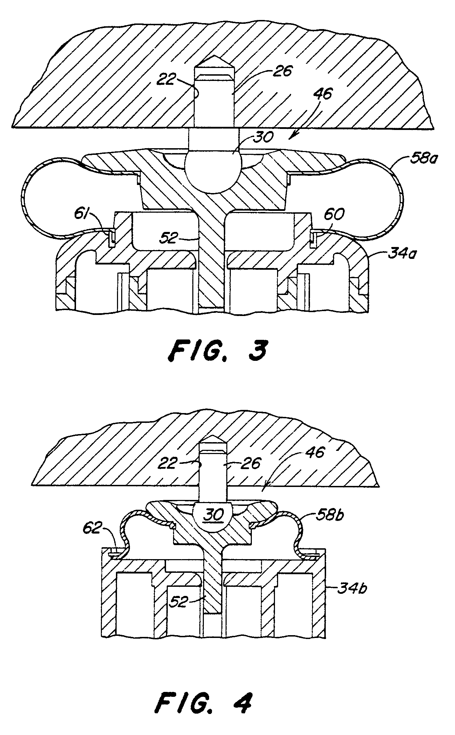

However, as shown in Figs. 3 and 4, the bellows 58a and 58b may be formed of stainless steel. The bellows 58a and 58b may then perform both the sealing function and the biasing function of the spring 56. In such cases, the spring 56 may be eliminated, as shown in Figs. 3 and 4, unless additional stiffness beyond that provided by the stainless steel bellows 58a and 58b is desired. The spring stiffness ensures close fitting against the bearing surfaces on the heads of the pins 26 and 28. However, the force against which the frame is deformed is provided by the strain in the frame itself.

Note, in Fig. 3, the bellows 58a has a generally C-shaped cross-section, viewing the left hand of the section, and the housing 34a has an axially extending annular groove 60 which surrounds the bore 44 and which receives an annular collar 61 on one end of the bellows 58a. In the alternative shown in Fig. 4, the bellows 58b has a generally S-shaped cross-section, viewing the left-hand half of the section. The radially inwardly extending end of the bellows 58b is sealingly coupled to a flange portion of the plunger 52, while the radially outwardly extending end of the bellows 58b is sealingly coupled to the other end of the housing 34b by means of a snap ring 62. In either case, as forces are applied to the ends of the frame 12, it deforms, and the separation of the links 14 and 16 varies, as does the position of core 54 relative to coil assembly 36. The LVDT and the circuit on board 40 can thus provide signals representing the forces applied to the frame 12. An electrical cable is run through an access opening (not shown) in the housing 34 for connecting to the circuit within the annular chamber 38. Wires extend from the annular chamber to the coils in the transducer chamber.

The transducer 20 may be inserted into or removed from the frame 12 merely by compressing the bellows (the spring if present), to allow the recesses 42 and 50 to be pulled away from their respective support pins 28 and 26.

## Claims

1. A load sensor comprising an open frame (12) deformable by an applied load, and a transducer (20) attached between two limbs (14, 16) of the frame and providing a signal dependent on the spacing between the two limbs, wherein the transducer comprises a housing (34) coupled to one of the limbs (16) and enclosing first and second relatively moveable parts (36, 54) of a position transducer, of which the first part is attached to the housing, a plunger (52) carrying the second transducer part (54) and extending slidably out of a bore (44) in the housing and coupled to the other limb (14), and a bellows (58) providing a seal between the plunger and the housing, characterised in that the transducer (20) includes means (56; 58a; 58b) biasing the plunger to extend out of the housing, by means (30, 50, 32, 42) coupling the housing (34) and the plunger (52) to the two limbs (14, 16) respectively of the frame by virtue of the bias between the plunger and housing and in that the housing and plunger can be pressed together against the action of the bias and with deformation of the bellows (58), for removal of the transducer (20) as a unit including the bellows, from between the two frame limbs (14, 16).

2. A load sensor according to claim 1, characterised in that the bias on the plunger (52) is provided wholly or in part by the bellows (58a or 58b).

3. A load sensor according to claim 1, characterised in that the bias on the plunger (52) is provided at least in part by a spring (56) enclosed by the bellows (58) and acting between the plunger (52) and the housing (34).

4. A load sensor according to claim 1, 2 or 3, characterised in that the housing (34) also comprises an outer chamber (38) within which a circuit of the transducer is enclosed.

5. A load sensor according to any of claims 1 to 4, characterised in that stubs (26, 28) with bearing surfaces (30, 32) are mounted in bores in the limbs (14, 16) of the frame, the bearing surfaces nesting in recesses (42, 50) in the housing (34) and plunger (52).

6. A load sensor according to any of claims 1 to 5, characterised in that the transducer (20) is a linear variable differential transformer of which the first part is a coil assembly (36) while the second is a magnetic core (54).

7. A load sensor according to any of claims 1 to 6, characterised in that the plunger end of the housing (34) includes an axially extending annular groove (60) surrounding the bore (44) and the bellows (58a) has a generally C-shaped cross-section, one end of the bellows having an annular collar (61) received by the annular groove.

8. A load sensor according to any of claims 1 to 6, characterised in that the bellows (58b) has a generally S-shaped cross-section with a radially inwardly extending end sealingly coupled to the plunger (52) and a radially outwardly extending end sealingly coupled to the plunger end of the housing (34).

## Patentansprüche

1. Lastfühler, der einen offenen, durch eine angelegte Last deformierbaren Rahmen (12) und einen Wandler (20) umfaßt, der zwischen zwei Gliedern (14, 16) des Rahmens angebracht ist und ein Signal in Abhängigkeit von dem Abstand zwischen den beiden Gliedern liefert, wobei der Wandler ein Gehäuse (34), das mit einem der Glieder (16) gekuppelt ist, und erste und zweite relativ bewegliche Teile (36, 54) eines Stellungswandlers umschließt, von denen der erste Teil an dem Gehäuse angebracht ist, einen Plunger (52), der den zweiten Wandlerteil (54) trägt und sich verschiebbar aus einer Bohrung (44) in dem Gehäuse erstreckt und mit dem anderen Glied (14) gekuppelt ist und Bälge (58) umfaßt, die eine Dichtung zwischen dem Plunger und dem Gehäuse bilden, dadurch gekennzeichnet, daß der Wandler (20) Mittel (56; 58a; 58b) umfaßt, die den Plunger so vorspannen, daß dieser sich aus dem Gehäuse erstreckt, durch Mittel (30, 50, 32, 42), die das Gehäuse (34) und den Plunger (52) jeweils mit den beiden Gliedern (14, 16) des Rahmens aufgrund der Vorspannung zwischen Plunger und Gehäuse kuppeln, und daß das Gehäuse und der Plunger gemeinsam gegen die Wirkung der Vorspannung und unter Verformung der Bälge (58) zusammengepreßt werden können, um den Wandler (20) als Einheit, einschließlich der Bälge, aus dem Bereich zwischen den beiden Rahmengliedern (14, 16) zu entfernen.

2. Lastfühler nach Anspruch 1, dadurch gekennzeichnet, daß die Vorspannung auf den Plunger (52) ganz oder teilweise durch die Bälge (58a oder 58b) vorgesehen ist.

3. Lastfühler nach Anspruch 1, dadurch gekennzeichnet, daß die Vorspannung auf den Plunger (52) wenigstens teilweise durch eine Feder (56) vorgesehen ist, die durch die Bälge (58) eingeschlossen ist und zwischen dem Plunger (52) und dem Gehäuse (34) wirksam ist.

4. Lastfühler nach Anspruch 1, 2 oder 3, dadurch gekennzeichnet, daß das Gehäuse (34) auch eine äußere Kammer (38) umfaßt, in der ein Kreis des Wandlers eingeschlossen ist.

5. Lastfühler nach irgendeinem der Ansprüche 1 bis 4, dadurch gekennzeichnet, daß Ansätze (26, 28) mit Lagerflächen (30, 32) in Bohrungen der Glieder (14, 16) des Rahmens montiert sind, wobei die Lagerflächen in Ausnehmungen (42, 50) in dem Gehäuse (34) und dem Plunger (52) eingreifen.

6. Lastfühler nach irgendeinem der Ansprüche 1 bis 5, dadurch gekennzeichnet, daß der Wandler (20) ein linear veränderlicher Differentialtransformator ist, dessen erster Teil eine Spulenanordnung (36) ist, während der zweite ein Magnetkern (54) ist.

7. Lastfühler nach irgendeinem der Ansprüche 1 bis 6, dadurch gekennzeichnet, daß das Plungerende des Gehäuses (34) eine sich axial erstreckende ringförmige Nut (60) umfaßt, welche die Bohrung (44) umgibt und daß die Bälge (58a) einen allgemein C-förmigen Querschnitt aufweisen, wobei ein Ende der Bälge einen ringförmigen Kragen (61) aufweist, der von der ringförmigen Nut aufgenommen ist.

8. Lastfühler nach irgendeinem der Ansprüche 1 bis 6, dadurch gekennzeichnet, daß die Bälge (58b) einen allgemein S-förmigen Querschnitt mit einem radial nach innen ragenden Ende aufweist, das abdichtend mit dem Plunger (52) gekuppelt ist, und mit einem radial nach außen sich erstreckenden Ende, das abdichtend mit dem plungerseitigen Ende (34) gekuppelt ist.

## Revendications

1. Capteur de mesure de charge comprenant un cadre ouvert (12) déformable sous l'effet d'une charge appliquée et un transducteur (20) fixé entre deux branches (14, 16) du cadre et fournissant un signal qui dépend de l'écartement entre les deux branches, dans lequel le transducteur comprend un boîtier (34) relié à l'une des branches (16) et entourant une première et une deuxième parties (36, 54) d'un transducteur de position, mobiles l'une par rapport à l'autre, la première partie étant fixée au boîtier, un piston plongeur (52) portant la deuxième partie (54) du transducteur et s'étendant de façon coulissante en dehors d'un alésage (44) du boîtier et étant relié à l'autre branche (14), et un soufflet (58) assurant l'étanchéité entre le piston plongeur et le boîtier, caractérisé en ce que le transducteur (20) comprend des moyens (56; 58a; 58b) qui sollicitent le piston plongeur de manière à ce qu'il fasse saillie hors du boîtier, et des moyens (30, 50, 32, 42) de couplage du boîtier (34) et du piston plongeur (52) aux deux branches (14, 16) du cadre respectivement sous l'effet de la sollicitation entre le piston plongeur et le boîtier, et en ce que le boîtier et le piston plongeur peuvent être pressés l'un vers l'autre contre l'action des moyens de sollicitation et avec déformation du soufflet (58), pour l'enlèvement du transducteur (20) dans son ensemble, y compris le soufflet, d'entre les deux branches (14, 16) du cadre.

2. Capteur de charge suivant la revendication 1, caractérisé en ce que la sollicitation exercée sur le piston plongeur (52) est fournie en totalité ou en partie par le soufflet (58a ou 58b).

3. Capteur de charge suivant la revendication 1, caractérisé en ce que la sollicitation exercée sur le piston plongeur (52) est fournie au moins en partie par un ressort (56) entouré par le soufflet (58) et agissant entre le piston plongeur (52) et le boîtier (34).

4. Capteur de charge suivant la revendication 1, 2 ou 3, caractérisé en ce que le boîtier (34) comprend également une chambre extérieure (38) dans laquelle un circuit du transducteur est logé.

5. Capteur de charge suivant l'une quelconque des revendications 1 à 4, caractérisé en ce que des pions (26, 28) présentant des surfaces de portée (30, 32) sont montés dans des alésages des branches (14, 16) du cadre, les surfaces de portée venant se loger dans des évidements (42, 50) du boîtier (34) et du piston plongeur (52).

6. Capteur de charge suivant l'une quelconque des revendications 1 à 5, caractérisé en ce que le transducteur (20) est un transformateur différentiel variable linéaire dont la première partie est constituée par une bobine (36), tandis que la deuxième partie est un noyau magnétique (54).

7. Capteur de charge suivant l'une quelconque des revendications 1 à 6, caractérisé en ce que l'extrémité du boîtier (34) située du côté du piston plongeur comporte une gorge annulaire (60) dirigée axialement, qui entoure l'alésage (44), et en ce que le soufflet (58a) a une section transversale sensiblement en forme de C, une extrémité du soufflet comportant une collerette annulaire (61) qui se loge dans la gorge annulaire.

8. Capteur de charge suivant l'une quelconque des revendications 1 à 6, caractérisé en ce que le soufflet (58b) a une section transversale sensiblement en forme de S et présente une extrémité dirigée radialement vers l'intérieur, reliée de façon étanche au piston plongeur (52), et une extrémité dirigée radialement vers l'extérieur, reliée de façon étanche à l'extrémité du boîtier (34) du côté du piston plongeur.

10

14

12

20

16

## FIG. 1

14

26  50  22
46          30
48

58
56          52
34

44          54    20

40          38

36

42          32
28
24

16

## FIG. 2

1

FIG. 3

FIG. 4